# EUROPÄISCHE PATENTANMELDUNG

(11) **EP 0 634 596 A1**
(43) Veröffentlichungstag der Anmeldung: **18.01.1995**
(21) Anmeldenummer: 94109629.9
(22) Anmeldetag: 22.06.1994
(51) Int. Cl.: F16K 11/02, G05D 23/13

(54) **Temperaturgesteuertes Dreiwege-Mischventil**

(30) Priorität: 25.06.1993 DE 9309447 U
(71) Anmelder: HANS SASSERATH & CO KG, D-41352 Korschenbroich (DE)
(72) Erfinder: Hecking, Willi, D-41238 Mönchengladbach (DE)
(74) Vertreter: Wolgast, Rudolf, Dipl.-Chem. Dr.

(57) **Zusammenfassung**

Ein temperaturgesteuertes Dreiwege-Mischventil enthält ein Ventilgehäuse (10), das eine Mischkammer (12) bildet, mit einem Heißwasser-Anschluß, einem Kaltwasser-Anschluß und einem Auslaßanschluß für Mischwasser, einen auf die Mischkammer-Temperatur ansprechenden Temperaturfühler (32) und von dem Temperaturfühler (32) gesteuerte Regel-Ventilmittel (26), durch welche mit zunehmender Mischkammer-Temperatur die Durchflußquerschnitte zwischen dem Heißwasser-Anschluß und der Mischkammer (12) und zwischen dem Kaltwasser-Anschluß und der Mischkammer (12) gegensinnig veränderbar sind. Das temperaturgesteuerte Dreiwege-Mischventil enthält weiterhin ein vom Kaltwasserzufluß steuerbares Hilfsventil (70), durch welches bei Wegfall des Kaltwasserzuflusses die Verbindung zwischen Heißwasser-Anschluß und Mischkammer (12) verzögerungsarm absperrbar ist.

## Beschreibung

Die Erfindung betrifft ein temperaturgesteuertes Dreiwege-Mischventil enthaltend ein Ventilgehäuse, das eine Mischkammer bildet, mit einem Heißwasser-Anschluß, einem Kaltwasser-Anschluß und einem Auslaßanschluß für Mischwasser, einen auf die Mischkammer-Temperatur ansprechenden Temperaturfühler und von dem Temperaturfühler gesteuerte Regel-Ventilmittel, durch welche mit zunehmender Mischkammer-Temperatur die Durchflußquerschnitte zwischen dem Heißwasser-Anschluß und der Mischkammer und zwischen dem Kaltwasser-Anschluß und der Mischkammer gegensinnig veränderbar sind.

Bei einem bekannten Mischventil dieser Art weist das Ventilgehäuse drei Anschlußstutzen auf, deren Achsen in einer Ebene verlaufen, wobei der Anschlußstutzen für den Heißwasser-Anschluß und der Anschlußstutzen für den Mischwasser-Auslaßanschluß miteinander fluchten und der Anschlußstutzen für den Kaltwasser-Anschluß rechtwinklig dazu an dem Ventilgehäuse angebracht ist. In der gleichen Ebene und fluchtend mit dem Anschlußstutzen für den Kaltwasser-Anschluß ist an dem Ventilgehäuse ein vierter Stutzen vorgesehen, durch welchen ein Temperaturfühler in das Ventilgehäuse einsetzbar ist. Auf dem vierten Stutzen sitzt ein Stellgriff zur Einstellung der gewünschten Temperatur. Zwischen dem Anschlußstutzen für den Heißwasser-Anschluß und dem Anschlußstutzen für den Mischwasser-Auslaßanschluß ist eine Mischkammer gebildet. In der Mischkammer sitzt ein Ausdehnungs-Temperaturfühler, der mit einer Flüssigkeit oder einem wachsähnlichen Stoff gefüllt ist. Der Ausdehnungs-Temperaturfühler ist von einer Druckfeder belastet. Die Druckfeder drückt eine Ventilanordnung gegen die Stirnfläche des Ausdehnungs-Temperaturfühlers. Die Innenwand des Ventilgehäuses ist zylindrisch. Ein Durchbruch in dieser Innenwand stellt eine Verbindung zwischen der Mischkammer und dem Anschlußstutzen für den Heißwasser-Anschluß her. Die Ventilanordnung enthält eine Schieberhülse, die in der Innenwand des Ventilgehäuses geführt ist und den Durchbruch beherrscht. Die Ventilanordnung enthält weiterhin einen Ventilsitz im Anschlußstutzen für den Kaltwasser-Anschluß und einen Ventilkörper, der mit einem Ventilstößel durch den Ventilsitz hindurchragt und mit der einlaßseitigen Oberfläche des Ventilsitzes einen Regelspalt bildet. Der Ausdehnungs-Temperaturfühler ist an einem Gegenlager abgestützt, das durch den Stellgriff axial verstellbar ist.

Der Ausdehnungs-Temperaturfühler verstellt die Schieberhülse so, daß sie bei Überschreiten eines an dem Stellgriff eingestellten Sollwertes den Zufluß von Heißwasser drosselt. Gleichzeitig verstellt der Ausdehnungs-Temperaturfühler den Ventilkörper so, daß der Zufluß von Kaltwasser erhöht wird. Bei Unterschreiten des Sollwertes wird entsprechend der Zufluß von Heißwasser erhöht und der Zufluß von Kaltwasser gedrosselt. Diese Regelung ist mit einer gewissen Trägheit behaftet. Das schadet normalerweise nichts, da sich die Einflußgrößen, z.B. die Wassertemperaturen, nur langsam ändern.

Es kann jedoch geschehen, daß in der Kaltwasserversorgung während der Entnahme von Mischwasser ein plötzlicher Druckabfall eintritt. Der Kaltwasserfluß wird dann plötzlich unterbrochen. In diesem Fall sucht der Ausdehnungs-Temperaturfühler zwar den Heißwasserfluß zu drosseln und den Kaltwasserfluß zu erhöhen. Letzteres hat aber gar keine Wirkung. Eine Drosselung des Heißwasserflusses erfolgt nur mit Verzögerung. Es tritt daher ungemischtes Heißwasser aus. Das kann zu gefährlichen Verbrühungen führen.

Der Erfindung liegt die Aufgabe zugrunde, bei einem temperaturgesteuerten Mischventil der eingangs definierten Art die Gefahr einer Übertemperatur bei plötzlichem Druckabfall in der Kaltwasserversorgung zu vermeiden.

Erfindungsgemäß wird diese Aufgabe gelöst durch ein vom Kaltwasserzufluß steuerbares Hilfsventil, durch welches bei Wegfall des Kaltwasserzuflusses die Verbindung zwischen Heißwasser-Anschluß und Mischkammer verzögerungsarm absperrbar ist.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: zeigt einen Schnitt durch ein temperaturgesteuertes Dreiwege-Mischventil längs der durch die Achsen der Anschlußstutzen für Heißwasser, Kaltwasser und Mischwasser bestimmten Ebene, wobei das Dreiwege-Mischventil in einer Ruhestellung bei abgesperrtem Auslaß ist.
- Fig.2: zeigt einen abgebrochenen Schnitt, ähnlich Fig.1, des Dreiwege-Mischventils in vergrößertem Maßstab, wobei das Dreiwege-Mischventil in seiner Betriebsstellung ist.

Das Dreiwege-Mischventil weist ein Ventilgehäuse 10 auf. Das Ventilgehäuse 10 bildet eine Mischkammer 12 mit zylindrischer Innenwand 14. An dem Ventilgehäuse sind auf gegenüberliegenden Seiten gleichachsige Anschlußstutzen 16 und 18 vorgesehen. Die Achsen der Anschlußstutzen 16 und 18 verlaufen senkrecht zu der Achse der zylindrischen Mischkammer 12. Der Anschlußstutzen 16 dient als Heißwasser-Anschluß. Der Anschlußstutzen 18 dient als Mischwasser-Auslaßanschluß. Gleichachsig zu der Mischkammer 12 ist an dem Ventilgehäuse 10 ein weiterer Anschlußstutzen 20 vorgesehen. Der Anschlußstutzen 20 dient als Kaltwasser-Anschluß. In dem Anschlußstutzen 20 ist ein wulstförmiger Ventilsitz 22 gebildet. Auf der dem Anschlußstutzen 20 gegenüberliegenden Seite und gleichachsig zu dem Anschlußstutzen 20 und der Mischkammer 12 ist ein Stutzen 24 an das Ventilgehäuse 10 angeformt. Der Stutzen 24 gestattet das Einsetzen einer temperaturgesteuerten Ventilanordnung 26 in die Mischkammer 12.

Das Innere des Anschlußstutzens 16 ist über eine Heißwasser-Durchtrittsöffnung 28 mit der Mischkammer 12 verbunden. Die Mischkammer 12 ist über eine in der Innenwandung 14 der Mischkammer 12 gebildeten Mischwasser-Austrittsöffnung 30 mit dem Inneren des Anschlußstutzens 18 verbunden. Die Mischwasser-Austrittsöffnung 30 liegt außermittig zu dem Anschlußstutzen 18 dicht innerhalb auf der Seite des Stutzens 24 liegenden Wandung des Anschlußstutzens 18.

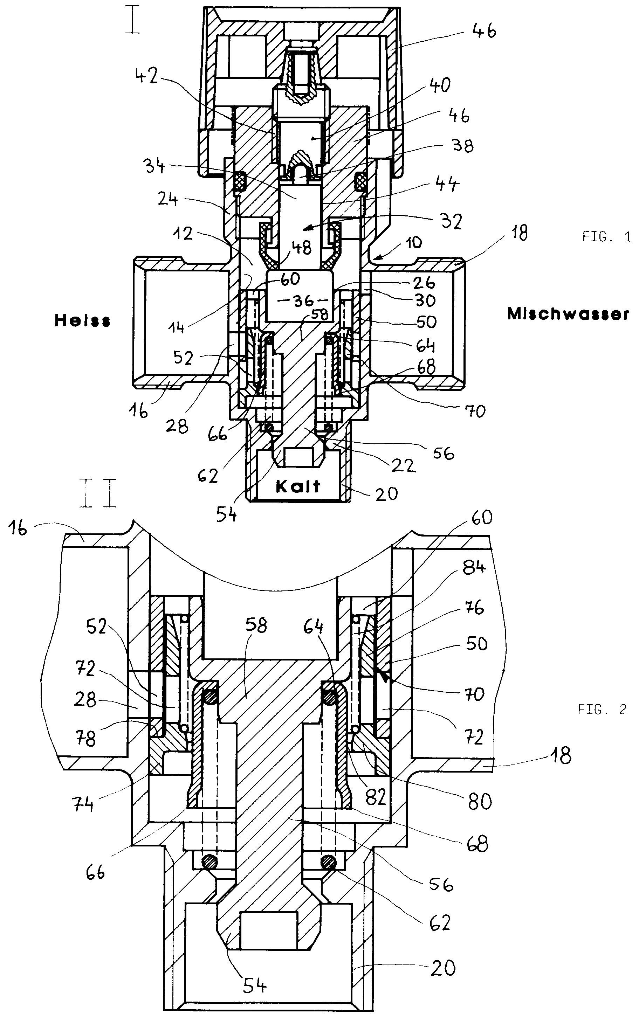

Die temperaturgesteuerte Ventilanordnung 26 weist einen Ausdehnungs-Temperaturfühler 32 auf. Der Ausdehnungs-Temperaturfühler 32 weist ein zylindrisches Gehäuse 34 mit einem verdickten Kopf 36 auf. In dem Gehäuse 34 ist ein Kolben 38 geführt. Das Gehäuse und der Kopf 36 sind mit einer Flüssigkeit oder einem wachsähnlichen Stoff gefüllt. Die Flüssigkeit oder der Stoff hat eine hohe thermische Ausdehnung. Der Kopf 36 sitzt in der Mischkammer 12. Der Kolben 38 stützt sich an einem Druckstück 40 ab. Das Druckstück 40 ist in einem Innengewinde 42 einer Bohrung 44 geführt. Die Bohrung 44 verläuft zentral durch ein Verschlußstück 46. Das Verschlußstück 46 ist in den Stutzen 24 eingeschraubt. Die Bohrung 44 bildet in ihrem mischkammerseitigen Abschnitt eine Führung für das Gehäuse 34 des Ausdehnungs-Temperaturfühlers 32. Das Druckstück 40 ist mit einem Stellgriff 46 verbunden, der auf dem Stutzen 24 sitzt. Durch Verdrehen des Stellgriffs 46 kann das Druckstück 40 axial verstellt werden. An dem Druckstück 40 stützt sich der Kolben 38 ab. Wenn der Kolben 38 durch Ausdehnung der Flüssigkeit oder des wachsartigen Stoffes aus dem Gehäuse 34 herausgedrückt wird aber an dem Druckstück 40 anliegt, dann wird das Gehäuse 34 mit dem Kopf 36 nach unten in Fig.1 bewegt. Eine Dichtung 48 dichtet die Bohrung 44 gegen die wassergefüllte Mischkammer 12 ab.

Auf dem Kopf 36 sitzt die Ventilanordnung 26. Die Ventilanordnung 26 enthält eine erste Schieberhülse 50. Die erste Schieberhülse 50 ist in der Innenwand 14 des Ventilgehäuses 10 geführt. Die Schieberhülse 50 weist seitliche Durchtrittsöffnungen 52 auf. Eine der Durchtrittsöffnungen 52 überlappt mehr oder weniger die Heißwasser-Durchtrittsöffnung 28. Der Grad der Überlappung hängt von der Ausdehnung des Ausdehnungs-Temperaturfühlers 32 und damit von der Wassertemperatur in der Mischkammer 12 ab. Weiterhin weist die Ventilanordnung 26 einen Ventilkörper 54 auf, der mit der einlaufseitigen Oberfläche des Ventilsitzes 22 zusammenwirkt. Der Ventilkörper 54 ist über einen Ventilstößel 56 mit einem schalenförmigen Teil 58 verbunden. Der schalenförmige Teil 58 nimmt den Kopf 36 des Ausdehnungs-Temperaturfühlers 32 auf. Der schalenförmige Teil 58 ist mit der ersten Schieberhülse 50 über Stege 60 verbunden. Eine Wendelfeder 62 stützt sich an der mischkammerseitigen Oberfläche des Ventilsitzes 22 ab und drückt auf einen nach innen ragenden Flansch 64 eines im wesentlichen zylindrischen Hohlkörpers 66. Der Flansch ist an dem dem Kaltwasseranschluß abgewandten Ende des Hohlkörpers 66 vorgesehen. Der Flansch 64 liegt unter dem Einfluß der Wendelfeder 62 an dem schalenförmigen Teil 58 an. Dadurch wird der schalenförmige Teil gegen den Ausdehnungs-Temperaturfühler 32 gedrückt. Außerdem wird der Ausdehnungs- Temperaturfühler 32 durch die vorgespannte Wendelfeder 62 vorbelastet und mit dem Kolben 38 in Anlage an dem Druckstück gehalten. Der Kohlkörper 66 weist an seinem dem Kaltwasseranschluß zugewandten Ende eine Erweiterung 68 auf.

In der ersten Schieberhülse 50 ist eine zweite Schieberhülse 70 geführt. Die zweite Schieberhülse 70 umgibt den Hohlkörper 66. Die zweite Schieberhülse 70 weist seitliche Durchbrüche 72 auf. Die zweite Schieberhülse 70 enthält einen ersten Abschnitt 74 größeren Durchmessers, der unmittelbar in der Innenwand 14 des Ventilgehäuses 10 geführt ist, und einen zweiten Abschnitt 76 von vermindertem Durchmesser, der in der ersten Schieberhülse 50 geführt ist. Zwischen den beiden Abschnitten 74 und 76 ist auf der Außenseite der zweiten Schieberhülse 70 eine Ringschulter 78 eine Ringschulter 78 gebildet. Auf der Innenseite ist an der zweiten Schieberhülse 70 eine Ringwulst 80 vorgesehen. Der Innendurchmesser der Ringwulst 80 entspricht etwa dem Außendurchmesser der Erweiterung 68 des Hohlkörpers 66. In der in Fig.1 dargestellten Grundstellung ist die zweite Schieberhülse 70 auf der Erweiterung 68 des Hohlkörpers 66 geführt. In der in Fig.2 dargestellten Betriebsstellung ist zwischen der Ringwulst 80 und dem Hohlkörper 66 ein Ringspalt 82 gebildet. Eine weiche, relativ schwach vorgespannte Wendelfeder 84 ist an den Stegen 60 abgestützt und drückt auf die stromabwärtige Seite der Ringwulst 80.

Die beschriebene Anordnung wirkt wie folgt:
Bei abgesperrtem (nicht dargestellten) Zapfventil stromab von dem Anschlußstutzen 18 fließt kein Kaltwasser. Dadurch tritt ein Druckausgleich an der zweiten Schieberhülse 70 ein. Die zweite Schieberhülse 70 wird von der Feder 84 in ihre in Fig.1 untere erste Ventilstellung gedrückt. In dieser ersten Ventilstellung ist die Durchtrittsöffnung 52 der ersten Schieberhülse 50 durch die zweite Schieberhülse 70 abgedeckt. Die Ringwulst 80 sitzt auf der Erweiterung 68. Die Stellung der ersten Schieberhülse 50 richtet sich nach der Temperatur in der Mischkammer 12.

Beim Zapfen von Wasser über den als Mischwasser-Auslaßanschluß dienenden Anschlußstutzen 18 tritt eine Kaltwasserfluß auf. Der Kaltwasserdruck wirkt zunächst voll auf die in Fig.1 und 2 untere Stirnfläche der zweiten Schieberhülse 70. Die zweite Schieberhülse 70 wird angehoben, so daß das Kaltwasser durch den Ringspalt 82 strömen kann. An dem Ringspalt tritt eine Druckdifferenz auf, welche die weiche Wendelfeder 84 überwindet. Die Schieberhülse legt sich mit der Ringschulter 78 an die einlaßseitige, in Fig.1 und 2 untere Stirnfläche der ersten Schieberhülse 50 an. Bei dieser gegenseitigen Lage der beiden Schieberhülsen 50 und 70 fluchten die beiden Durchtrittsöffnungen 52 und 72. Das ist der Fall unabhängig von der Position der ersten Schieberhülse 50. Diese Stellung ist die zweite Ventilstellung. Es fließt dann Heißwasser und mischt sich in der Mischkammer 12 mit dem Kaltwasser. Es stellt sich dadurch eine bestimmte Temperatur des Mischwassers in der Mischkammer ein. Je nachdem, ob diese Temperatur unter oder über der am Stellgriff 46 eingestellten Solltemperatur liegt, zieht sich der Ausdehnungs-Temperaturfühler 32 zusammen oder dehnt sich der Ausdehnungs-Temperaturfühler 32 aus. Die erste Schieberhülse 50 bewegt sich im ersteren Fall zusammen mit dem Ventilkörper 54 nach oben. Dadurch wird die Überlappung der Durchtrittsöffnungen 28 und 52 und damit der Durchflußquerschnitt für das Heißwasser vergrößert. Der Kaltwasserfluß wird stärker gedrosselt. Dadurch wird die Temperatur des Mischwassers erhöht. Im letzteren Fall bewegt sich die erste Schieberhülse 50 zusammen mit dem Ventilkörper 54 nach unten. Dadurch wird die Überlappung der Durchtrittsöffnungen 28 und 52 und damit der Durchflußquerschnitt für das Heißwasser verringert. Der Kaltwasserfluß wird weniger gedrosselt. Dadurch wird die Temperatur des Mischwassers verringert.

Bei Unterbrechung des Kaltwasserstromes fällt der Differenzdruck an der zweiten Schieberhülse 70 weg. Die zweite Schieberhülse 70 wird von der Wendelfeder 84 in die erste Schaltstellung zurückgedrückt. Dabei wird die Durchtrittsöffnung 52 der ersten Schieberhülse 50 von der zweiten Schieberhülse 70 abgedeckt. Der Heißwasserfluß wird trägheitsarm unterbrochen. Das geschieht, bevor etwa der Ausdehnungs-Temperaturfühler 32 auf den Temperaturanstieg anspricht und den Heißwasserfluß durch eine Verschiebung der ersten Schieberhülse 50 drosselt. Ein Hubweg des Ausdehnungs-Temperaturfühlers, der zu einem vollständigen Absperren des Heißwasserflusses führt, ist u.U. gar nicht vorgesehen. Dadurch wird verhindert, daß bei plötzlicher Unterbrechung der Kaltwasserzufuhr Heißwasser ohne Zumischung von Kaltwasser austreten kann.

## Patentansprüche

1. Temperaturgesteuertes Dreiwege-Mischventil enthaltend ein Ventilgehäuse (10), das eine Mischkammer (12) bildet, mit einem Heißwasser-Anschluß, einem Kaltwasser-Anschluß und einem Auslaßanschluß für Mischwasser, einen auf die Mischkammer-Temperatur ansprechenden Temperaturfühler (32) und von dem Temperaturfühler (32) gesteuerte Regel-Ventilmittel (26), durch welche mit zunehmender Mischkammer-Temperatur die Durchflußquerschnitte zwischen dem Heißwasser-Anschluß und der Mischkammer (12) und zwischen dem Kaltwasser-Anschluß und der Mischkammer (12) gegensinnig veränderbar sind, **gekennzeichnet durch** ein vom Kaltwasserzufluß steuerbares Hilfsventil (70), durch welches bei Wegfall des Kaltwasserzuflusses die Verbindung zwischen Heißwasser-Anschluß und Mischkammer (12) verzögerungsarm absperrbar ist.

2. Temperaturgesteuertes Dreiwege-Mischventil nach Anspruch 1, **dadurch gekennzeichnet, daß**
(a) die Regel-Ventilmittel (26) eine von dem Temperaturfühler (32) verstellbare erste Schieberhülse (50) mit einer Durchtrittsöffnung (52) für das Heißwasser aufweisen, die durch den Temperaturfühler (32) in einer zylindrischen Innenwand (14) des Ventilgehäuses (10) relativ zu einer in der Innenwand (14) gebildeten Heißwasser-Durchtrittsöffnung (28) verschiebbar ist,
(b) das zusätzliche Hilfsventil von einer zweiten Schieberhülse (70) gebildet ist, die
- in in der ersten Schieberhülse (50) verschiebbar geführt ist,
- bei Wegfall des Kaltwasserflusses unter dem Einfluß einer Feder (84) in eine erste Ventilstellung bewegt wird, in welcher die zweite Schieberhülse (70) die Durchtrittsöffnung (52) der ersten Schieberhülse (50) abdeckt,
- unter dem Einfluß des Kaltwasserflusses gegen die Wirkung der Feder (84) in einer zweiten Ventilstellung an einem Anschlag der ersten Schieberhülse (50) zur Anlage kommt,
- eine Durchtrittsöffnung (72) aufweist, welche in der zweiten Ventilstellung mit der Durchtrittsöffnung (52) der ersten Schieberhülse (50) fluchtet.

3. Temperaturgesteuertes Dreiwege-Mischventil nach Anspruch 2, **dadurch gekennzeichnet, daß** die zweite Schieberhülse (70) auf der Innenseite eine Ringwulst (80) bildet, die mit einer zentralen Führungsfläche einen Drosselspalt (82) bildet, wobei der bei Kaltwasserfluß auftretende Druckabfall an dem Drosselspalt (82) eine Verschiebung der zweiten Schieberhülse (70) gegen die Wirkung der Feder (84) bewirkt.

4. Temperaturgesteuertes Dreiwege-Mischventil nach Anspruch 3, **dadurch gekennzeichnet, daß** die im wesentlichen zylindrische Führungsfläche an ihrem dem Kaltwasser-Anschluß zugewandten Ende bis auf im wesentlichen den Innendurchmesser der Ringwulst (80) nach außen aufgeweitet ist.

5. Temperaturgesteuertes Dreiwege-Mischventil nach Anspruch 4, **dadurch gekennzeichnet, daß** die Führungsfläche von der Mantelfläche eines im wesentlichen hohlzylindrischen Körpers (66) gebildet ist, der an seinem dem Kaltwasser-Anschluß abgewandten Ende einen nach innen ragenden Flansch (64) bildet, welcher ein temperaturfühlerseitiges Widerlager für eine Feder (62) bildet, die den als Ausdehnungskörper ausgebildeten Temperaturfühler (32) belastet.

6. Temperaturgesteuertes Dereiwege-Mischventil nach einem der Ansprüche 3 bis 5, **dadurch gekennzeichnet, daß** die zweite Schieberhülse (70) einen unmittelbar an der zylindrischen Innenwand (14) des Ventilgehäuses (10) geführten Abschnitt (74) auf der Seite des Kaltwasser-Anschlusses und einen dagegen nach innen zurückspringenden, in der ersten Schieberhülse (50) geführten Abschnitt (76) aufweist und zwischen diesen beiden Abschnitten auf der Außenseite der zweiten Schieberhülse (70) eine Ringschulter (78) gebildet wird, wobei der Anschlag der ersten Schieberhülse (50) von der kaltwasserseitigen Stirnfläche dieser ersten Schieberhülse (50) gebildet ist, an welcher die zweite Schieberhülse (70) in der zweiten Ventilstellung mit der Ringschulter (78) anliegt.
